# EUROPÄISCHE PATENTANMELDUNG

(11) **EP 4 254 864 A1**
(43) Veröffentlichungstag der Anmeldung: **04.10.2023**
(21) Anmeldenummer: 22165878.4
(22) Anmeldetag: 31.03.2022
(51) Int. Cl.: H04L 9/40, H04L 67/12, H04W 4/70

(54) **VERFAHREN ZUM BETREIBEN EINES VERNETZTEN IOT-GERÄTS IN EINEM AUTOMATISIERUNGSNETZWERK, COMPUTERPROGRAMM, IOT-GERÄT UND AUTOMATISIERUNGSNETZWERK**

(71) Anmelder: Siemens Aktiengesellschaft, 80333 München (DE)
(72) Erfinder: Becker, Stefan, 91325 Adelsdorf (DE); Birk, Gunther, 91054 Erlangen/Buckenhof (DE); Falk, Rainer, 85586 Poing (DE); Fries, Steffen, 85598 Baldham (DE); Greiten, Tobias, 91083 Baiersdorf (DE); Hoch, Maximilian, 91325 Adelsdorf (DE)
(74) Vertreter: Siemens Patent Attorneys

(57) **Zusammenfassung**

Bei dem Verfahren zum Betrieb eines Systems mit einem Mobilfunkmodul und einem IoT-Gerät zur Konfiguration einer Mobilfunkfähigkeit des IoT-Geräts wird ein Nutzungsumfang eines Teilnehmeridentifikationsmoduls des Mobilfunkmoduls abhängig von einer von dem IoT-Gerät abhängigen Zulassungsinformation eingerichtet.

## Beschreibung

Die Erfindung betrifft ein Verfahren zum Betreiben eines vernetzten IoT-Geräts in einem Automatisierungsnetzwerk mit mindestens einer Applikation und ein Computerprogramm, ein IoT-Gerät sowie ein Automatisierungsnetzwerk.

In IT-Umgebungen, etwa in digitalisierten Büroumgebungen, bei Servern oder in Rechenzentren, ist es bekannt, Sicherheitsrichtlinien zu konfigurieren und auf jeweils mittels eines Netzwerks verwaltete Endgeräte zu implementieren. Diese Sicherheitsrichtlinien geben etwa vor, welche Verfahren für eine Netzwerk-Authentisierung genutzt werden dürfen, welche Wurzelzertifikate anerkannt werden oder auch ob und wie eine Applikation mit anderen Netzwerkkomponenten interagieren darf. Dabei steht zum einen die IT-Sicherheit im Vordergrund. Zum anderen sind die betroffenen Endgeräte typischerweise nicht eingeschränkt, so dass eine zusätzliche Belastung durch die Verschlüsselung einer Verbindung nicht ins Gewicht fällt.

In industriellen Umgebungen, also im Bereich der (engl.) "Operation Technology" (OT) oder des industriellen Internets der Dinge (IIoT (engl.) = "Industrial Internet of Things"), ist ein entsprechendes Durchsetzen einer Security Policy im laufenden Betrieb einer Anlage häufig nicht möglich, da eine Sicherheitsmaßnahme, die durch eine Sicherheitsrichtlinie vorgegeben wird, den Betrieb der Anlage beeinträchtigen könnte. Beeinträchtigungen können dabei den regulären Prozess betreffen, z.B. durch Verzögerungen von Abläufen bis zum Totalausfall. Ebenfalls möglich sind Einflüsse auf die Sicherheit (Safety) einer Anlage möglich, so dass Gefährdungen für das Betriebspersonal entstehen können.

Es ist daher Aufgabe der Erfindung, ein verbessertes Verfahren zum Betreiben eines vernetzten IoT-Geräts in einem Automatisierungsnetzwerk anzugeben, welches insbesondere die vorgenannten Nachteile nicht aufweist. Ferner ist es Aufgabe der Erfindung, ein verbessertes Computerprogrammprodukt, ein verbessertes IoT-Gerät sowie ein verbessertes Automatisierungsnetzwerk zu schaffen, mit welchen insbesondere das verbesserte Verfahren ausführbar ist.

Diese Aufgabe der Erfindung wird mit einem Verfahren mit den in Anspruch 1 angegebenen Merkmalen sowie mit einem Computerprogrammprodukt mit den in Anspruch 11 angegebenen Merkmalen und mit einem IoT-Gerät mit den in Anspruch 12 angegebenen Merkmalen sowie mit einem Automatisierungsnetzwerk mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zum Betreiben eines vernetzten IoT-Geräts in einem Automatisierungsnetzwerk mit mindestens einer auf dem IoT-Gerät laufenden Applikation und mit mindestens einer auf dem IoT-Gerät implementierten Sicherheitsrichtlinie mit mindestens einer Sicherheitsfunktion. Bei dem erfindungsgemäßen Verfahren wird mindestens eine Sicherheitsfunktion für die mindestens eine Applikation abhängig von einem Gerätezustand des IoT-Geräts in einem produktiven Prozess gewählt und das IoT-Gerät mit der Applikation mit der mindestens einen Sicherheitsfunktion betrieben.

Mittels des erfindungsgemäßen Verfahrens kann vorteilhaft auch in industriellen Umgebungen, d. h. im Bereich der Operation Technology (OT) und des industriellen Internets der Dinge (auch als IIoT bezeichnet: IIoT = (engl.) "Industrial Internet of Things"), eine Sicherheitsrichtlinie mit der mindestens einen, dynamisch festgelegten Sicherheitsfunktion durchgesetzt werden, da die Berücksichtigung des Gerätezustands einen kontinuierlichen und gefährdungsfreien Betrieb des vernetzten IoT-Geräts ermöglicht. Folglich können auch in OT- und/oder IIoT-Umgebungen dynamisch festgelegte Sicherheitsfunktionen zum Einsatz kommen, ohne dass die Produktivität oder der zuverlässige Betrieb der OT- oder IIoT-Umgebung beeinträchtigt sind. Besonders bevorzugt wird das erfindungsgemäße Verfahren zum Betrieb industrieller IoT-Geräte eingesetzt. Vorteilhaft kann mittels des erfindungsgemäßen Verfahrens auch in industriellen Umgebungen ein regelmäßiges IT-Sicherheitsscanning erfolgen.

Es versteht sich, dass es sich bei den Begriffen Sicherheitsrichtlinie und Sicherheitsfunktion bevorzugt um Begriffe aus der Sicherheit im Sinne der IT-Sicherheit, regelmäßig als (engl.) "IT Security" bezeichnet, handelt. Sicherheitsrichtlinie meint dabei insbesondere einen Regelsatz einer oder mehrerer Sicherheitsregeln, welche auch als (engl.) "Security Policy" bekannt sind. Sicherheitsfunktion wird dabei bevorzugt als (engl.) "Security functionality" oder (engl.) "Security function" verstanden.

Mittels des erfindungsgemäßen Verfahrens ist es möglich, eine abgestufte Sicherheitsrichtlinie bereitzustellen, die eine an den jeweiligen Gerätezustand angepasste, mindestens eine, Sicherheitsfunktion erlaubt, die auch in betriebskritischen OT- und/oder IIoT-Umgebungen zuverlässig einsetzbar ist.

Bei dem erfindungsgemäßen Verfahren ist das IoT-Gerät vorzugsweise ein Fertigungsgerät oder ein Wartungsgerät oder ein Steuer- oder eine Regelungsgerät für ein Fertigungsgerät oder ein Wartungsgerät oder eine Überwachungseinrichtung für ein Fertigungsgerät oder ein Wartungsgerät.

Gerade das Umfeld der Fertigung, insbesondere der digitalen Fertigung, sowie der Wartung bilden sicherheitskritische Umgebungen, in welchen mittels des erfindungsgemäßen Verfahrens entweder ein sicherer Betrieb als bisher bekannt möglich ist oder es kann ein vorgegebenes Maß an Sicherheit vorteilhaft während des laufenden Betriebs bei der Fertigung oder Wartung erreicht werden, da die Umsetzung der Sicherheitsrichtlinien keine manuelle Anpassung der Sicherheitsrichtlinien und ggf. eine Unterbrechung der Fertigung oder Wartung erfordert, sondern automatisiert anhand einer automatisierten Erfassung des aktuellen Gerätezustands im Produktivprozess erfolgen kann.

Bevorzugt umfasst bei dem erfindungsgemäßen Verfahren der Gerätezustand einen Betriebszustand des IoT-Geräts, insbesondere zur Ausführung eines aktuellen Arbeitsschritts des IoT-Geräts, oder der Gerätezustand ist der Betriebszustand des IoT-Geräts. Insbesondere der Betriebszustand des IoT-Geräts ist ein wesentlicher Parameter für die Umsetzung einer Sicherheitsrichtlinie, da abhängig vom Betriebszustand des IoT-Geräts Rechenressourcen, beispielsweise zur verschlüsselten Kommunikation mittels einer zur Kommunikation eingerichteten Applikation oder zur Sicherheitsüberwachung einer Applikation, zur Verfügung stehen oder nicht. Zudem stehen abhängig vom Betriebszustand des Geräts regelmäßig unterschiedliche Privilegien für Applikationen zur Verfügung, etwa in einem Aktualisierungsbetrieb zur Aktualisierung einer Software des IoT-Geräts oder in einem Wartungszustand zur Wartung des IoT-Geräts.

Zweckmäßig ist oder umfasst bei dem Verfahren gemäß der Erfindung der Gerätezustand eine Kommunikationsumgebung des I-oT-Geräts, insbesondere eine Signalverbindung des IoT-Geräts. Insbesondere abhängig von der Kommunikationsumgebung des IoT-Geräts können eine oder mehrere Sicherheitsfunktionen mit unterschiedlichem Sicherheitsgrad ausgebildet sein. So ist für eine abgeschottete, automatisierungsnetzwerkinterne, Kommunikation ein anderer, regelmäßig geringerer, Sicherheitsstandard anzuwenden als für eine externe, aus den Automatisierungsnetzwerk hinein- oder hinausführende, Kommunikation.

Geeigneterweise umfasst bei dem erfindungsgemäßen Verfahren der Gerätezustand eine Ressourcenauslastung, insbesondere eine Speicherauslastung und/oder eine Prozessorauslastung. Bei der Ressourcenauslastung handelt es sich um einen besonders relevanten Parameter, da die mindestens eine Sicherheitsfunktion zum sicheren Betrieb häufig einen bestimmten, relativen, Anteil oder eine bestimmte, absolute, Größe von Ressourcen, etwa von zur Verfügung stehendem Speicher oder von zur Verfügung stehender Rechenleistung, erfordern. Ist die Ressourcenauslastung infolge der zusätzlich hinzutretenden mindestens einen Sicherheitsfunktion zu groß, so mag zwar die IT-Sicherheit gewahrt bleiben, aber die Funktionssicherheit des IoT-Geräts kann gestört werden. In dieser Weiterbildung des erfindungsgemäßen Verfahrens hingegen kann die Funktionssicherheit zuverlässig gewahrt bleiben.

Bevorzugt wird bei dem Verfahren gemäß der Erfindung die mindestens eine Sicherheitsfunktion abhängig von dem Gerätezustand aus einer Datenbank oder aus einer konfigurierbaren Liste von zwei oder mehr Sicherheitsfunktionen gewählt. So stehen zumindest zwei Sicherheitsfunktionen für eine abgestufte Sicherheitsrichtlinie zur Verfügung, die eine dynamische Anpassung der Sicherheitsfunktionen abhängig vom Gerätezustand erlauben.

Vorzugsweise weist bei dem erfindungsgemäßen Verfahren die Datenbank für das IoT-Gerät zwei oder mehr spezifische Sicherheitsfunktionen auf. In einer alternativen oder zusätzlichen und ebenfalls vorteilhaften Weiterbildung des erfindungsgemäßen Verfahrens weist die Datenbank für eine Geräteklasse des IoT-Geräts zwei oder mehr spezifische Sicherheitsfunktionen auf.

Bei dem Verfahren gemäß der Erfindung erfolgt die Auswahl der Sicherheitsmaßnahme bei einem Start des IoT-Geräts und/oder bei einem Start der Applikation und/oder in wiederholt aufeinanderfolgenden, insbesondere regelmäßigen, zeitlichen Abständen. In dieser Weiterbildung der Erfindung ist eine kontinuierliche und fortgesetzte dynamische Anpassung der Sicherheitsfunktion möglich.

Bei dem erfindungsgemäßen Verfahren weist die Sicherheitsfunktion in einer zweckmäßigen Weiterbildung der Erfindung Vorgaben zur Authentisierung mit Kommunikationspartnern des IoT-Geräts und/oder Vorgaben für Sicherheitsprotokolle und/oder Vorgaben für ein Überwachen von Kommunikationsverbindungen auf. Mittels der vorgenannten Sicherheitsfunktionen ist eine Sicherheit des erfindungsgemäßen Verfahrens vorteilhaft deutlich erhöht.

Vorzugsweise wird das erfindungsgemäße Verfahren computerimplementiert ausgeführt.

Das erfindungsgemäße Computerprogrammprodukt ist ausgebildet, das erfindungsgemäße Verfahren wie vorhergehend erläutert, auszuführen, wenn es auf einem IoT-Gerät ausgeführt wird. Dabei weist das erfindungsgemäße Computerprogrammprodukt eine Eingangsschnittstelle für Informationen zum Gerätezustand und eine Datenbank mit mindestens zwei Sicherheitsfunktion für das Betreiben mindestens einer Applikation sowie mindestens einer Auswahlkomponente zur Auswahl einer Sicherheitsfunktion für die Applikation in Abhängigkeit der Informationen zum Gerätezustand und eine Durchsetzungskomponente zur Durchsetzung der Sicherheitsfunktion auf. In dieser Weiterbildung der Erfindung kann das erfindungsgemäße Verfahren folglich computerimplementiert und automatisiert ohne manuellen Eingriff und somit besonders effizient ausgeführt werden.

Das erfindungsgemäße IoT-Gerät ist zur Ausführung eines erfindungsgemäßen Verfahrens wie vorhergehend beschrieben ausgebildet und weist insbesondere ein Computerprogrammprodukt wie vorhergehend beschrieben auf. Das erfindungsgemäße IoT-Gerät weist mindestens eine auf dem IoT-Gerät implementierte Applikation und mit mindestens eine auf dem IoT-Gerät implementierte Sicherheitsrichtlinie mit mindestens einer Sicherheitsfunktion auf, wobei die mindestens eine Sicherheitsfunktion für die mindestens eine Applikation abhängig von einem Gerätezustand des IoT-Geräts aktivierbar ist und wobei das IoT-Gerät ausgebildet ist, mit der Applikation mit der mindestens Sicherheitsfunktion betrieben zu werden. Für das erfindungsgemäße IoT-Gerät ergeben sich vorteilhaft dieselben Vorteile wie bereits zum erfindungsgemäßen Verfahren beschrieben. Vorzugsweise werden die bei der Beschreibung des erfindungsgemäßen Verfahrens optional beschriebenen Merkmale, soweit umsetzbar, für das erfindungsgemäße IoT-Gerät realisiert. In diesen bevorzugten Weiterbildungen ergeben sich ebenfalls die zuvor beschriebenen Vorteile der Erfindung.

Das erfindungsgemäße IoT-Gerät ist bevorzugt ein Fertigungsgerät oder ein Wartungsgerät oder ein Steuer- oder ein Regelungsgerät für ein Fertigungsgerät oder ein Wartungsgerät oder ein Überwachungsgerät für ein Fertigungsgerät oder ein Wartungsgerät. In dieser Weiterbildung des erfindungsgemäßen IoT-Geräts ist das IoT-Gerät vorteilhaft ein industrielles IIoT-Gerät und/oder ein IoT-Gerät in einer OT-Umgebung.

Das erfindungsgemäße Automatisierungsnetzwerk weist mindestens ein erfindungsgemäßes IoT-Gerät wie vorhergehend beschrieben auf. Das Automatisierungsnetzwerk ist zur Ausführung eines Verfahrens wie zuvor beschrieben ausgebildet und/oder zumindest eines, mehrere oder sämtliche des mindestens einen IoT-Geräts ist/sind ein erfindungsgemäßes IoT-Gerät wie zuvor beschrieben.

Nachfolgend wird die Erfindung anhand eines in der Zeichnung dargestellten Ausführungsbeispiels näher erläutert. Es zeigen:
- Fig. 1: ein erfindungsgemäßes Automatisierungsnetzwerk mit erfindungsgemäßen IoT-Geräten zur Ausführung eines erfindungsgemäßen Verfahrens schematisch in einer Prinzipskizze sowie
- Fig. 2: ein Ablaufdiagramm des erfindungsgemäßen Verfahrens schematisch in einem Ablaufdiagramm.

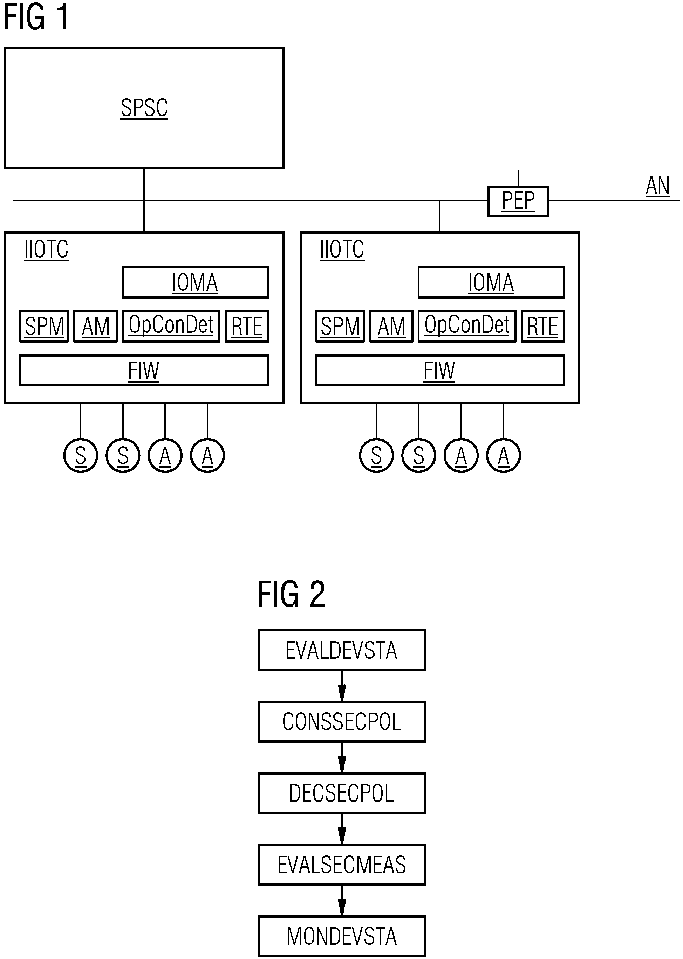

Die in Figur 1 dargestellten beiden erfindungsgemäßen IIoT-Komponenten (IIoT = (engl.) "industrial internet of things") IIOTC bilden jeweils vernetzte Fertigungsgeräte, welche jeweils mittels Signalverbindungen in ein Automatisierungsnetzwerk AN eingebunden sind. Diese IIoT-Komponenten IIOTC weisen im dargestellten Ausführungsbeispiel verschiedene Sensoren S und Aktoren A auf. Die Sensoren S stellen Informationen bereit, die einerseits direkt zur Steuerung der Aktoren A derjenigen IIoT-Komponente IIOTC genutzt werden, zu denen die Sensoren S jeweils gehören. Dies wird mit einer IO-Modul-Applikation IOMA bewerkstelligt, die auf der jeweiligen IIoT-Komponente IIOTC in einer Laufzeitumgebung RTE läuft, welche in eine Firmware FIW eingebettet ist. Die Sensorinformationen werden zugleich an weitere IIoT-Komponenten IIOTC weitergeleitet, die diese zur Steuerung ihrer lokal verbundenen Aktoren A nutzen.

Zu jeder lokal installierten IO-Modul-Applikation IOMA sowie für weitere Applikationen, welche auf den IIOT-Komponenten IIOTC laufen, wird mittels eines Application Managers AM eine Sicherheitsrichtlinie, d. h. eine Security Policy, bereitgestellt, die durch den Security Policy Manager SPM verwaltet wird. In der Sicherheitsrichtlinie sind sicherheitsrelevante Randbedingungen für die Ausführung verschiedener Sicherheitsmechanismen für eine der vorgenannten Applikationen oder für eine Gruppe von Applikationen festgelegt. Dem Security Policy Manager SPM wird durch eine zusätzliche Funktion "Operational Condition Detector" OpConDet die aktuelle Auslastung der lokalen, d. h. von der jeweiligen IIOT-Komponente IIOTC verwalteten, Ressourcen, hier Speicherplatz und verfügbare CPU-Zeit, sowie über den aktuellen Betriebszustand der Komponente übermittelt, sodass der Security Policy Manger SPM anhand der Ressourcenauslastung mittels der Sicherheitsrichtlinien die jeweiligen Sicherheitsmaßnahmen festlegt. Der Betriebszustand der IIoT-Komponente IIOTC, der die jeweilige Sicherheitsrichtlinie festlegt und die Ressourcenauslastung, die anhand der jeweils festgelegten Sicherheitsrichtlinie die jeweiligen Sicherheitsmaßnahmen festlegt, bilden zusammengenommen den Gerätezustand der IIOT-Komponente IIOTC im Sinne der vorliegenden Anmeldung.

Vorliegend ist durch den Security Policy Manager SPM für mögliche Betriebszustände der IIoT-Komponente IIOTC und für jede einzelne Applikation eine Sicherheitsrichtlinie der IIOT-Komponente ermittelbar. Mittels eines Ermittlungsschritts EVALDEVSTA (s. Fig. 2) wird dabei zunächst der Betriebszustand der IIoT-Komponente IIOTC ermittelt.

Zur Wahl einer Sicherheitsrichtlinie für die jeweilige Applikation wird vom Security Policy Manager eine Zuordnungstabelle zur Ausführung eines Zuordnungsschritt CONSSECPOL herangezogen. Die Zuordnungstabelle enthält für jede Applikation eine Zuordnung von Betriebszuständen und Sicherheitsrichtlinien, sodass jedem mittels des Ermittlungsschritts EVALDEVSTA ermittelten Betriebszustands mittels des Zuordnungsschritts CONSSECPOL eine Sicherheitsrichtlinie zuordbar ist. Es wird dazu anhand des ermittelten Betriebszustands die zugeordnete Sicherheitsrichtlinie gewählt und eines Festlegungsschritts DECSECPOL festgelegt. Die Sicherheitsrichtlinien legen anhand vorgegebener absoluter und relativer Grenzwerte für die jeweilige Ressourcenauslastung, also für die Speicherauslastung und die verfügbare CPU-Zeit, jeweils vorgesehene Sicherheitsmaßnahmen fest.

Somit werden bei den erfindungsgemäßen IIoT-Komponenten IIOTC die Sicherheitsmaßnahmen abhängig von einem durch die jeweilige Ressourcenauslastung und durch den jeweiligen Betriebszustand charakterisierten Gerätezustand automatisiert festgelegt.

Jede bei dem Security Policy Manager SPM vorgehaltene Sicherheitsrichtlinie der Zuordnungstabelle legt nun fest, welche Sicherheitsmechanismen beispielsweise beim Öffnen einer Kommunikationsverbindung oder beim lokalen Authentisieren eines Nutzers lokal anhand des Betriebszustands und der Ressourcenauslastung der IIOT-Komponente IIOTC möglich sind.

Die Sicherheitsrichtlinien enthalten im dargestellten Ausführungsbeispiel eine Zuordnung zur jeweiligen Applikation, für die die jeweilige Sicherheitsrichtline gültig ist, sowie für die jeweilige Applikation eine Angabe der Abhängigkeit von den jeweiligen Randbedingungen, im dargestellten Ausführungsbeispiel die Abhängigkeit der jeweiligen Sicherheitsmaßnahmen vom aktuell verfügbaren Speicher und der aktuellen Prozessorlast sowie vom jeweils von der IIoT-Komponente IIOTC unternommenen Fertigungsschritt und dem aktuell genutzten Kommunikationsprotokoll.

Die in der Sicherheitsrichtlinie festgelegten Sicherheitsmaßnahmen werden nun abhängig von den aktuellen Randbedingungen, d. h. der aktuellen Ressourcenauslastung in Übereinstimmung mit der Sicherheitsrichtlinie in einem Sicherheitsmaßnahmen-Festlegungsschritt EVALSECMEAS festgelegt.

Im dargestellten Ausführungsbeispiel sind weder die Ressourcenauslastung noch der jeweilige Betriebszustand der IIoT-Komponente IIOTC konstant, sondern hängen auch von aktuell auf der jeweiligen IIoT-Komponente IIOTC laufenden Applikationen sowie von einem aktuell von der IIoT-Komponente IIOTC ausgeführten Fertigungsschritt ab. Daher wird im dargestellten Ausführungsbeispiel mittels des Überwachungsschrittes MONDEVSTA der jeweilige Gerätezustand der IIoT-Komponente IIOTC überwacht. Wenn sich der Betriebszustand der IIoT-Komponente IIOTC oder die Ressourcenauslastung der IIoT-Komponente IIOTC ändert, wird die Sicherheitsrichtlinie abhängig von dem Betriebszustand und die in der Sicherheitsrichtlinie jeweils vorgesehene Sicherheitsmaßnahme abhängig von der Ressourcenauslastung angepasst.

Zudem enthält die Sicherheitsrichtlinie jeweils eine voreingestellte Sicherheitsmaßnahme für die jeweilige Applikation zur Authentisierung für einen lokalen Zugriff und/oder Remote-Zugriff sowie zum Integritäts- oder Vertraulichkeitsschutz der Kommunikation mit anderen IIoT-Komponenten IIOTC und zur Autorisierung für Zugriffe auf die Applikation oder von der Applikation, wobei die voreingestellte Sicherheitsmaßnahme abhängig von der jeweiligen Ressourcenauslastung alternative Sicherheitsmaßnahmen vorsieht, welche an die Stelle der voreingestellten Sicherheitsmaßnahme treten, wobei die alternativen Sicherheitsmaßnahmen ein erweitertes lokales Logging und eine Einbeziehung einer im Automatisierungsnetzwerk AN verfügbaren Sicherheitsrichtlinien-Unterstützungs-Komponente SPSC mittels einer in der Sicherheitsrichtlinie niedergelegten Addressinformation der Sicherheitsrichtlinien-Unterstützungs-Komponente SPSC vorsehen, welche zur Überwachung der jeweiligen Applikation auf der jeweiligen IIoT-Komponente IIOTC ausgebildet ist.

Zusätzlich ist in der Sicherheitsrichtlinie vorgesehen, dass eine Information über den Einsatz schwächerer Sicherheitsmechanismen der jeweiligen IIoT-Komponente IIOTC einer solchen Edge-Komponente oder solchen IIoT-Komponenten IIOTC übermittelt werden, welche mit der betroffenen IIoT-Komponente IIOTC zum Datenaustausch signalverbunden sind. Diese Information kann von der signalverbundenen Edge-Komponente oder den signalverbundenen IIoT-Komponenten IIOTC bei einer Datenauswertung durch die signalverbundene Edge-Komponente oder die signalverbundenen IIoT-Komponenten IIOTC berücksichtigt werden.

Weiterhin können Sicherheitsmaßnahmen in einem Sicherheitsrichtlinien-Durchsetzungsmodul PEP durchgesetzt werden. Damit kann beispielswiese verhindert werden, dass eine externe Kommunikation mit der betroffenen IIoT-Komponente IIOTC direkt aufgebaut wird, wenn die Sicherheitsmaßnahme Ende-zu-Ende Sicherheit fordert. In diesem Fall kann die Kommunikation über die Sicherheitsrichtlinien-Unterstützungs-Komponente SPSC als Proxy aufgebaut werden, die dann die notwendigen Sicherheitsmechanismen anstelle der IIoT-Komponente IIOTC umsetzen kann.

Nachfolgend wird beispielhaft eine Liste von Sicherheitsrichtlinien (linke Spalte) abhängig von einem Betriebszustand (mittlere Spalte) der jeweiligen IIoT-Komponente IIOTC für eine jeweilige Applikation aufgeführt. Dabei umfassen die Sicherheitsrichtlinien jeweils individuell spezifische Abhängigkeiten (rechte Spalte) von einer Ressourcenauslastung der jeweiligen IIoT-Komponente IIOTC und weitere Abhängigkeiten wie jeweils für die Sicherheitsrichtlinie angegeben.

| **Sicherheitsrichtlinie** | **Betriebs zustand** | **Spezifische Abhängigkeit von einer Ressourcenauslastung und weitere Abhängigkeiten** |
|---|---|---|
| Zertifikatsbasierte Authentisierung im Kontext eines Sicherheitsprotokolls | - Operative Nutzung | Authentisierung und Zertifikatsvalidierung erlaubt, wenn: - der Prozessor eine Last von maximal 60% hat und - freier Speicher von mindestens 50kByte zur Verfügung steht - kein kritischer (Safetyrelevanter) Fertigungsschritt durchgeführt wird Authentisierung (weniger Voraussetzungen) erlaubt, wenn: - der Prozessor eine Last von maximal 80% hat und - freier Speicher von mindestens 20kByte zur Verfügung steht - kein kritischer Fertigungsschritt durchgeführt wird - Die Zertifikatsvalidierung (incl. Revokationsstatus) muss an eine externe Komponente delegiert werden. Wenn lokal keine Authentisierung möglich ist, aber die Verbindung aufgebaut werden muss: - Senden einer Information zu einer Monitoring Komponente, um die Verbindung streng zu überwachen. - Nutzung von Verfahren zum Integritätsschutz (keine Vertraulichkeit), um passives Überwachen / |
| | | Monitoren zu ermöglichen. |
| | Maintenance | Immer |
| Aktualisierung von Sitzungsschlüsseln | Operative Nutzung | Erlaubt, wenn kein kritischer Fertigungsschritt durchgeführt wird |
| | Maintenance | Immer |
| Aufbau von unverschlüsselten Verbindungen zu netzwerklokalen Geräten | Operative Nutzung | Erlaubt unter erhöhten Auflagen zum Überwachen / Monitoren - Senden einer Information zu einer Monitoring Komponente, um die Verbindung streng zu überwachen. |
| | Maintenance | Verbindungsaufbau nur zum FW-Update Server erlaubt (unter der Randbedingung, dass die Firmware transportunabhängig gesichert ist (z.B. über eine digitale Signatur) |
| Aufbau von verschlüsselten Verbindungen zu netzwerklokalen Geräten | Operative Nutzung | Authentisierung und Zertifikatsvalidierung erlaubt, wenn: - der Prozessor eine Last von maximal 60% hat und - freier Speicher von mindestens 50kByte zur Verfügung steht - kein kritischer Fertigungsschritt durchgeführt wird Authentisierung erlaubt, wenn: - der Prozessor eine Last von maximal 80% hat und - freier Speicher von mindestens 20kByte zur Verfügung steht - kein kritischer Fertigungsschritt durchgeführt wird |
| | | - Die Zertifikatsvalidierung (incl. Revokationsstatus) muss an eine externe Komponente delegiert werden. Wenn lokal keine Authentisierung möglich ist, aber die Verbindung aufgebaut werden muss: - Senden einer Information zu einer Monitoring Komponente, um die Verbindung streng zu überwachen. - Nutzung von Verfahren zum Integritätsschutz (keine Vertraulichkeit), um passives Überwachen / Monitoren zu ermöglichen. |
| | Maintenance | Verbindungsaufbau nur zum - Device Management Server - Konfigurations-Server - FW-Update Server |
| Applikations-Update | Operative Nutzung | Nie |
| | Maintenance | Immer |

## Patentansprüche

1. Verfahren zum Betreiben eines vernetzten IoT-Geräts (IIOTC) in einem Automatisierungsnetzwerk (AN) mit mindestens einer Applikation (APP) und mit mindestens einer auf dem IoT-Gerät (IIOTC) implementierten Sicherheitsrichtlinie mit mindestens einer Sicherheitsvorgabe, bei welchem mindestens eine Sicherheitsfunktion für die mindestens eine Applikation abhängig von einem Gerätezustand des IoT-Geräts (IIOTC) gewählt (EVALSESCMEAS) wird und bei welchem das IoT-Gerät (IIOTC) mit der Applikation mit der mindestens Sicherheitsfunktion betrieben wird.

2. Verfahren nach dem vorhergehenden Anspruch, bei welchem das IoT-Gerät (IIOTC) ein Fertigungsgerät oder ein Wartungsgerät oder ein Steuer- oder eine Regelungsgerät für ein Fertigungsgerät oder ein Wartungsgerät oder eine Überwachungseinrichtung für ein Fertigungsgerät oder ein Wartungsgerät ist.

3. Verfahren nach einem der vorhergehenden Ansprüche, bei welchem der Gerätezustand ein Betriebszustand des IoT-Geräts (IIOTC), insbesondere ein aktueller Arbeitsschritt des IoT-Geräts (IIOTC) umfasst.

4. Verfahren nach einem der vorhergehenden Ansprüche, bei welchem der Gerätezustand eine Kommunikationsumgebung des IoT-Geräts (IIOTC), insbesondere eine Signalverbindung des IoT-Geräts (IIOTC), ist oder umfasst.

5. Verfahren nach einem der vorhergehenden Ansprüche, bei welchem der Gerätezustand eine Ressourcenauslastung, insbesondere eine Speicherauslastung und/oder eine Prozessorauslastung, umfasst.

6. Verfahren nach einem der vorhergehenden Ansprüche, bei welchem die mindestens eine Sicherheitsfunktion abhängig von dem Gerätezustand aus einer Datenbank oder aus einer konfigurierbaren Liste von zwei oder mehr Sicherheitsmaßnahmen gewählt wird.

7. Verfahren nach einem der vorhergehenden Ansprüche, bei welchem die Datenbank für das IoT-Gerät (IIOTC) spezifische Sicherheitsfunktion aufweist.

8. Verfahren nach einem der vorhergehenden Ansprüche, bei welchem die Datenbank für eine Geräteklasse des IoT-Geräts (IIOTC) spezifische Sicherheitsfunktion aufweist.

9. Verfahren nach einem der vorhergehenden Ansprüche, bei welchem die Sicherheitsmaßnahme bei einem Start des IoT-Geräts (IIOTC) und/oder bei einem Start der Applikation und/oder in wiederholt aufeinanderfolgenden, insbesondere regelmäßigen, zeitlichen Abständen gewählt (EVALSESCMEAS) wird.

10. Verfahren nach einem der vorhergehenden Ansprüche, bei welchem die Sicherheitsfunktion Vorgaben zur Authentisierung mit Kommunikationspartnern des IoT-Geräts (IIOTC) und/oder Vorgaben für Sicherheitsprotokolle und/oder Vorgaben für ein Überwachen von Kommunikationsverbindungen aufweist.

11. Computerprogrammprodukt zur Ausführung eines Verfahrens nach einem der vorhergehenden Ansprüche, wenn es auf einem IoT-Gerät (IIOTC) ausgeführt wird, welches eine Eingangsschnittstelle für Informationen zum Gerätezustand, eine Datenbank mit mindestens zwei Sicherheitsfunktion für das Betreiben mindestens einer Applikation sowie mindestens einer Auswahlkomponente zur Auswahl einer Sicherheitsfunktion für die Applikation in Abhängigkeit der Informationen zum Gerätezustand und eine Durchsetzungskomponente zur Durchsetzung der Sicherheitsfunktion aufweist.

12. IoT-Gerät, ausgebildet zur Ausführung eines Verfahrens nach einem der vorhergehenden Ansprüche, insbesondere mit einem Computerprogrammprodukt nach Anspruch 11, mit mindestens einer auf dem IoT-Gerät (IIOTC) implementierten Applikation (APP) und mit mindestens einer auf dem IoT-Gerät (IIOTC) implementierten Sicherheitsrichtlinie mit mindestens einer Sicherheitsfunktion, bei welchem die mindestens eine Sicherheitsfunktion für die mindestens eine Applikation abhängig von einem Gerätezustand des IoT-Geräts (IIOTC) aktivierbar ist und bei welchem das IoT-Gerät (IIOTC) ausgebildet ist, mit der Applikation mit der mindestens Sicherheitsfunktion betrieben zu werden.

13. IoT-Gerät nach dem vorhergehenden Anspruch, welches ein Fertigungsgerät oder ein Wartungsgerät oder ein Steuer- oder ein Regelungsgerät für ein Fertigungsgerät oder ein Wartungsgerät oder ein Überwachungsgerät für ein Fertigungsgerät oder ein Wartungsgerät ist.

14. Automatisierungsnetzwerk mit mindestens einem IoT-Gerät (IIOTC), bei welchem das Automatisierungsnetzwerk zur Ausführung eines Verfahrens nach einem der Ansprüche 1 bis 10 ausgebildet ist und/oder zumindest eines, mehrere oder sämtliche des mindestens einen IoT-Geräts (IIOTC) ein IoT-Gerät (IIOTC) nach einem der Ansprüche 12 oder 13 ist.

15. Automatisierungsnetzwerk nach dem vorhergehenden Anspruch, welches ein Fertigungsnetzwerk oder ein Wartungsnetzwerk ist.
